# EUROPEAN PATENT SPECIFICATION

(11) **EP 3 102 642 B1**
(45) Date of publication and mention of the grant of the patent: **15.07.2020**
(21) Application number: 15743379.8
(22) Date of filing: 03.02.2015
(51) Int. Cl.: C09D 5/02, C09D 133/10, C08J 7/04

(54) **ANTI-GLARE TEXTURE COATING FOR PACKAGING**
BLENDUNGSFREIE TEXTURBESCHICHTUNG FÜR VERPACKUNG
REVÊTEMENT TEXTURÉ ANTIREFLET POUR EMBALLAGE

(30) Priority: 03.02.2014 US 201461935152 P
(43) Date of publication of application: 14.12.2016
(73) Proprietor: Bemis Company, Inc., Neenah WI 54956 (US)
(72) Inventor: KRIHA, James, A., Neenah, WI 54957 (US)
(74) Representative: Vossius & Partner Patentanwälte Rechtsanwälte mbB
(86) International application number: PCT/US2015/014171
(87) International publication number: WO 2015/117111

(56) References cited:
- EP-A1- 1 944 342
- WO-A1-2007/140091
- US-A- 3 527 729
- US-A- 3 527 729
- US-A- 5 518 809
- US-A- 5 518 809
- US-A1- 2006 021 888
- US-A1- 2006 021 888
- US-A1- 2009 061 117
- US-A1- 2009 061 117
- US-B2- 7 829 626
- US-B2- 8 546 491
- US-B2- 8 546 491

## Description

### BACKGROUND OF THE INVENTION

This present application describes a coating that imparts anti-glare and texture properties to packaging. Such coating includes water, an acrylic carrier, acrylic particles and other organic particles.

Coatings are used in various industries. For example, US Patent 6,730,388 discloses a high viscosity, cured resin coating applied to a flooring substrate via air knife, roll coater, spray coating or curtain coating. The cured resin coating is primarily non-aqueous (comprising only minute concentrations or water) and may comprise a flatting agent comprising 5-micron-sized nylon particles and a plurality of texture-producing particles comprising 60-micron-sized nylon particles. Or, for example, EP 1 944 342 A1, discloses aqueous compositions comprising a binder component and a polymeric duller component, and providing matte coatings having soft touch properties.

In general, in some industries, coatings may comprise a liquid base, a resin base, an additive or additives and a reducer/thinner. The liquid base may be water-based or solvent-based. (As used in this context, a water-based liquid base is distinct from a solvent-based liquid base, even though water is chemically considered a solvent.) The resin base may be any one or a combination of various solids-containing materials that impart properties and benefits such as texture, heat resistance, abuse resistance (e.g., scuff and/or abrasion resistance), opacity, gloss, anti-glare, etc. The additive or additives may be liquid or solid and may further contribute to the properties and benefits. The reducer/thinner is a liquid used to adjust the viscosity of the coating to enable efficient application of the coating and may be water-based, solvent-based or a blend of water-based and solvent-based.

Coatings are used on packaging to impart various properties and benefits to packaging. For example, US Patent Application Publication 2012/0015145 discloses a coating including pigments and a binder to create a matter varnish layer. The pigments may be polyurethane microbeads, and the binder may be based on acrylic.

What is needed is a cost-effective coating that imparts anti-glare and texture properties to packaging without negatively impacting other properties and benefits.

### BRIEF SUMMARY OF THE INVENTION

This need is met by the coating described in the present application. A first embodiment describes a coating comprising an emulsion comprising (a) water, (b) a first particle comprising particles having an average particle size of greater than 0 but less than 10 microns and comprising acrylic beads, (c) an acrylic-based carrier and (d) a second particle comprising particles having an average particle size of from
35 microns to 110 microns and comprising polyamide, polyethylene, polypropylene, polytetrafluoroethylene or combinations of such. The combination of the water, the first particle and the acrylic-based carrier comprises from 75 % to 95 % or from about 80 % to about 90 % or from about 82 % to about 85 % by weight of the coating. The second particle comprises from 5 % to 25 % or from about 10 % to about 20 % or from about 15 % to about 18 % by weight of the coating. In some embodiments, the second particle may comprise particles of more than one size having a first particle size and a second particle size. In some embodiments, the coating may also comprise a coreactant additive in an amount from 0 % to about 5 % by weight of the coating. The coating may be printable and may create an anti-glare, texture effect on a packaging material in the absence of radiation curing. In some embodiments, the coating may have a viscosity of from about 50 to about 125 centipoise or from about 70 to about 125 centipoise.

In a second embodiment, a packaging material is described comprising a substrate comprising metal, glass, paper, plastic or thermoplastic and the coating described above. The packaging material may be food packaging. The packaging material may have an anti-glare, texture effect in the absence of radiation curing. In some embodiments of the second embodiment, the substrate may comprise a thermoplastic film or biaxially oriented polyethylene terephthalate. In some embodiments, the coating may be printable and may be flexographic printed or rotogravure printed.

In a third embodiment, a method of rotogravure printing a coating to substrate is described. This method comprises the steps of (a) preparing the coating described above, (b) using a rotogravure press to apply the coating to the substrate described above and (c) allowing the coated substrate to cure in the absence of radiation curing. In some embodiments, the method may further comprise adding reducer/thinner to the coating as needed to adjust coating viscosity to measure from about 50 centipoise to about 125 centipoise or from about 70 centipoise to about 125 centipoise and/or adding a coreactant additive to the coating in an amount from 0 % to about 5 % by weight of the coating. In some embodiments, the method may further comprise corona treating the substrate prior to using the rotogravure press to apply the coating to the substrate. In some embodiments, the method may further comprise applying ink to the substrate as either a surface print or reverse print prior to using the rotogravure press to apply the coating to the substrate. If the method includes applying ink, the rotogravure press may then apply the coating on a surface over the ink if surface printed or on a surface without the ink if reverse printed.

### BRIEF DESCRIPTION OF THE DRAWINGS

FIGS 1 and 2 are SEM photographs of the surface of an embodiment of a packaging material according to the present application.
FIG. 3 is a SEM photograph of a sample stacked image of the surface of an embodiment of a packaging material according to the present application.
FIG 4 is a SEM height profile of an embodiment of a packaging material according to the present application.
FIGS 5-12 are SEM photographs of the surface of an embodiment of a packaging material according to the present application.

### DETAILED DESCRIPTION OF THE INVENTION

With references to the embodiments described in the present application, in some embodiments, the coating may provide the package with the look and feel of traditional butcher paper or Kraft paper. The coating may be applied to various food or non-food packaging materials and substrates including but not limited to metal, glass, paper, plastic and thermoplastic by means known in the art. In one embodiment, the coating may be "printable" and may be applied to paper or thermoplastic substrates by coating or printing means known in the art. Such means include but are not limited to flexographic coating and printing and rotogravure coating and printing. As used throughout this present application and as known in the art, the term "printable" refers to a coating that is able to be printed on a substrate, as distinguished from a substrate that is able to be printed with a coating. In some embodiments, the coating or printing means do not require energy curing, such as ultraviolet (UV) radiation or electron beam (e-beam) radiation. As such, thermoplastic webs to be coated or printed may be wider (e.g., greater than about 24 inches (about 61 centimeters)) than those requiring UV curing. As known in the art, UV curing is predominantly done on narrow webs of width less than about 24 inches (about 61 centimeters) As used throughout this present application, the term "thermoplastic" refers to a polymer or polymer mixture that softens when exposed to heat and then returns to its original condition when cooled to room temperature. In general, thermoplastic materials may include natural or synthetic polymers and may be used in flexible, semi-rigid or rigid packaging, as known in the art.

In some embodiments, the anti-glare, texture coating described in this present application comprises a water-based liquid base, an anti-glare agent resin base, a texture agent additive, an optional coreactant additive and an optional water-based or water-based and solvent-based blend reducer/thinner.

The anti-glare agent is capable of reducing or eliminating glare. In general, an anti-glare agent addresses external sources of reflection (such as bright sunlight or high ambient lighting conditions) off a surface and the possible impact of the reflection, such as the impact on readability or general aesthetics. Anti-glare agents use diffusion mechanisms to disperse or otherwise break up the reflected light. Such diffusion mechanisms include but are not limited to (1) mechanical or chemical surface texturing and (2) minute particles suspended or otherwise incorporated into a liquid coating.

Non-limiting examples of anti-glare agents with particles (as suspensions or otherwise) include the following:
- resins particles, such as acrylic resin particles, cross-linked acrylic resin particles, polystyrene particles, cross-linked polystyrene particles, melamine resin particles, benzoguanamine resin particles and blends of such, as disclosed in US Patent 7,611,760;
- a mixture of two incompatible polymers, with different refractive indexes of individual polymer domains, such as polymethylmethacrylate and polystyrene, as disclosed in US Patent 6,939,576;
- water-soluble organic polymers such as polysaccharides and derivatives of such, including nonionic cellulose ethers (e.g., ethyl hydroxyl cellulose), cationic cellulosic ethers (e.g., quaternary ammonium modified cellulose ether) and polyglucosamines and derivatives of such, as disclosed in US Patent 7,703,456; and
- hydrophilic polymers such as hydrophilic organic monomers or oligomers, prepolymers and copolymers derived from the group consisting of vinyl alcohol, N-vinylpyrrolidone, N-vinyl lactam, acrylamide, amide, styrenesulfonic acid, combination of vinylbutyral and N-vinylpyrrolidone, hydroxyethyl methacrylate, acrylic acid, vinylmethyl ether, vinylpyridylium halide, melamine, maleic anhydride/methyl vinyl ether, vinylpyridine, ethyleneoxide, ethyleneoxide ethylene imine, glycol, vinyl acetate, vinyl acetate/crotonic acid, methyl cellulose, ethyl cellulose, carboxymethyl cellulose, hydroxyethyl cellulose, hydroxypropyl cellulose, hydroxymethyl ethyl cellulose, hydroxypropylmethyl cellulose, cellulose acetate, cellulose nitrate, starch, gelatin, albumin, casein, gum, alginate, hydroxyethyl methacrylate, hydroxypropyl methacrylate, ethylene glycol methacrylates (e.g., triethylene glycol methacrylate) and methacrylamides, N-alkyl methacrylamides (e.g., N-methyl methacrylamide and N-hexyl methacrylamide), N,N-dialkyl methacrylamides (e.g., N,N--dimethyl methacrylamide and poly-N,N-dipropyl methacrylamide), N-hydroxyalkyl methacrylamide polymers (e.g., poly-N-methylol methacrylamide and poly-N-hydroxy ethyl methacryiamide), N,N-dihydroxyalky! methacrylamide polymers (e.g., poly-N,N-dihydroxyethyl methacrylamide, ether polyols, polyethylene oxide, polypropylene oxide, polyvinyl ether, alkylvinyl sulfones, alkylvinylsulfone-acrylates and related compounds and a combination of any of the above, as disclosed in US Patent 7,008,979.

Further non-limiting examples of anti-glare agents include the Opulux™ Optical Finishes, such as Opulux™ 4903, Opulux™ 5000, and Opulux™ 5001, each available from The Dow Chemical Company (Midland, Michigan). In addition to anti-glare, the Opulux™ Finishes may provide heat resistance and abuse resistance not generally provided by matte coatings or matte varnishes. The Opulux™ Finishes (also referred to as overlacquers) are water-based, acrylic-based (such that they are water-resistant when dry) and include acrylic beads in combination with an acrylic-based carrier technology. As disclosed in the October 2012 Opulux™ Technical Overview from The Dow Chemical Company, the acrylic beads have a particle size of greater than 0 microns but less than 10 microns. As further disclosed in the October 2012 Opulux™ Technical Overview, the Opulux™ Finishes produce a soft, smooth, non-rough, non-textured, luxurious touch and feel for packaging and labels. When used in the coating described in this present application, the water of the Opulux™ Finish comprises the liquid base of the coating and the acrylic beads (also referred to as "first particle") in combination with the acrylic-based carrier comprise the resin base of the coating. As used throughout this present application, the term "acrylic" refers to thermoplastic polymers or copolymers of acrylic acid, methacrylic acid, esters of these acids or acrylonitrile, as defined in Hawley's Condensed Chemical Dictionary, 14th Edition, 2001. As known in the art, acrylics (including acrylic beads/particles and acrylic-based carriers) are generally non-water soluble or water insoluble and, as such, form emulsions with water. Furthermore, as known in the art and as used throughout this present application, the term "emulsion" refers to a dispersion of droplets of one substance in another in which it is not soluble or in which it is insoluble.

In general, for the anti-glare, texture coating described in the present application, the combination of the liquid base and the resin base may comprise from about 75 % to about 95 % by weight of the coating or from about 80 % to about 90 % by weight of the coating or from about 82 % to about 85 % by weight of the coating or, more specifically, about 83.5 % by weight of the coating.

The anti-glare, texture coating also comprises a texture agent additive (also referred to as "second particle") and, optionally, a coreactant additive. The texture agent additive may comprise organic compounds, particles or powders such as those comprising polyamide (PA), polyethylene (PE), polypropylene (PP), polytetrafluoroethylene (PTFE) or combinations of such. In some embodiments, the texture agent may consist essentially of organic compounds, particles or powders, such that it does not comprise any effective amount of inorganic compounds, particles or powders such as talc (and other inorganic minerals), silica, titanium dioxide, metal, calcium salts such as calcium carbonate and calcium sulfate, sand, clay, diatomaceous earth or combinations of such. It is believed (without being bound by belief) that softer, compressible organic additives may allow for processing, coating and printing efficiencies in that they may be easier to wipe and not as harsh on equipment as compared to the traditional hard, coarse, abrasive inorganic additives. Additionally, as known in the art, such organic additives are non-water soluble or water insoluble. Non-limiting examples of organic texture agent additives include the following:
- Nylotex 200, a finely micronized polyamide having a reported melting point of 218-224 °C, a reported density at 25 °C of 1.14 g/cc, a reported mean particle size of 30-50 microns and a reported maximum particle size of 74 microns, available from Micro Powders, Inc. (Tarrytown, New York);
- Nylotex 140, a finely micronized polyamide having a reported melting point of 218-224 °C, a reported density at 25 °C of 1.14 g/cc, a reported mean particle size of 45-65 microns and a reported maximum particle size of 104 microns, available from Micro Powders, Inc. (Tarrytown, New York);
- Texture-UF, a crystalline polyethylene powder having a reported melting point of 144 °C, a reported specific gravity at 25 °C of 0.93, a reported slip ranking of 5, a reported abrasion ranking of 9 and a reported average particle size of 35 microns, available from Shamrock Technologies, Inc. (Newark, New Jersey);
- Texture-5378W, a crystalline polyethylene powder having a reported melting point of 144 °C, a reported specific gravity at 25 °C of 0.93, a reported slip ranking of 5, a reported abrasion ranking of 9 and a reported average particle size of 50 microns, available from Shamrock Technologies, Inc. (Newark, New Jersey);
- Texture-5380W, a crystalline polyethylene powder having a reported melting point of 144 °C, a reported specific gravity at 25 °C of 0.93, a reported slip ranking of 5, a reported abrasion ranking of 9 and a reported average particle size of 65 microns, available from Shamrock Technologies, Inc. (Newark, New Jersey);
- Texture-5382W, a crystalline polyethylene powder having a reported melting point of 144 °C, a reported specific gravity at 25 °C of 0.93, a reported slip ranking of 5, a reported abrasion ranking of 9 and a reported average particle size of 80 microns, available from Shamrock Technologies, Inc. (Newark, New Jersey);
- Texture-5384-W, a crystalline polyethylene powder having a reported melting point of 144 °C, a reported specific gravity at 25 °C of 0.93, a reported slip ranking of 5, a reported abrasion ranking of 9 and a reported average particle size of 110 microns, available from Shamrock Technologies, Inc. (Newark, New Jersey);
- Fluo 625CTX2, a micronized polytetrafluoroethylene having a reported softening point of greater than 316 ° C, a reported density at 25 ° C of 2.15 g/cc, a reported maximum particle size of 124.0 microns and a reported mean particle size of 20.0-25.0 microns, available from Micro Powders, Inc. (Tarrytown, New York);
- Fluo 625F, a micronized polytetrafluoroethylene having a reported softening point of greater than 316 ° C, a reported density at 25 ° C of 2.2 g/cc, a reported maximum particle size of 44.0 microns and a reported mean particle size of 11.0-13.0 microns, available from Micro Powders, Inc. (Tarrytown, New York);
- Fluo 625F-H, a micronized polytetrafluoroethylene having a reported softening point of greater than 316 ° C, a reported density at 25 ° C of 2.2 g/cc, a reported maximum particle size of 96.0% < 44.0 microns and a reported mean particle size of 13.0-21.0 microns, available from Micro Powders, Inc. (Tarrytown, New York);
- Fluo 750TX, a micronized polytetrafluoroethylene having a reported softening point of 325-350 ° C, a reported density at 25 ° C of 2.2 g/cc, a reported maximum particle size of 148 microns and a reported mean particle size of 20-30 microns, available from Micro Powders, Inc. (Tarrytown, New York);
- Fluo 850TX, a micronized polytetrafluoroethylene having a reported softening point of 340-350 ° C, a reported density at 25 ° C of 2.2 g/cc, a reported maximum particle size of 148.0 microns and a reported mean particle size of 20.0-30.0 microns, available from Micro Powders, Inc. (Tarrytown, New York); and
- Microtex 511, a micronized modified high molecular weight polytetrafluoroethylene having a reported softening point of greater than 316 ° C, a reported density at 25 ° C of 2.20 g/cc, a reported maximum particle size of 124.0 microns and a reported mean particle size of 20.0-25.0 microns, available from Micro Powders, Inc. (Tarrytown, New York).
Product literature further reports that both the Micro Powders Nylotex materials and the Shamrock Texture materials provide enhancements to and benefits with UV radiation systems (i.e., those that require radiation curing). Such product literature is silent regarding possible applications in non-UV radiation systems (i.e., those that require no radiation curing). Additionally, product literature further reports that the Micro Powders polytetrafluoroethylene products are mainly used in combination with micronized waxes to achieve higher surface lubricity and anti-blocking properties.

The texture agent additive comprises particles of from about 35 microns to about 110 microns in size or from about 50 microns to about 110 microns in size or from about 65 microns to about 110 microns in size or from about 74 microns to about 110 microns in size or from about 80 microns to about 110 microns in size. The texture agent additive may comprise from about 5 % to about 25 % by weight of the coating or from about 10 % to about 20 % by weight of the coating of from about 15 % to about 18 % by weight of the coating or, more specifically about 15 % by weight of the coating. Additionally, the texture agent additive may comprise particles of more than one size. As non-limiting examples, the texture agent additive may comprise a combination of about 25 % 110-micron size particles and about 75 % 80-micron size particles or a combination of about 66.7 % 80-micron size particles and about 33.3 % 65-micron size particles or a combination of about 66.7 % 65-micron size particles and about 33.3 % 50-micron size particles or a combination of about 33.3 % 50-micron size particles and about 66.7 % 35-micron size particles. (In each example above, the percent is a percent by weight of the texture agent additive.)

As described above, the anti-glare, texture coating may also comprise a coreactant additive. The coreactant additive, also known as a hardener, an external crosslinker, a crosslinker and/or a catalyst may be added to enable the coating to adhere, dry, cure and/or solidify and/or to contribute to abuse resistance. A non-limiting example of a coreactant additive is CR 9-101, available from The Dow Chemical Company (Midland, Michigan). In general, a coreactant additive may comprise from 0 % to about 5 % by weight of the coating or from about 1 % to about 3 % by weight of the coating or from about 1.5 % to about 2.5 % by weight of the coating or, more specifically, about 1.5 % by weight of the coating.

The anti-glare, texture coating may also comprise a reducer/thinner comprising water only or comprising a water/isopropyl alcohol blend. This reducer/thinner may comprise isopropyl alcohol in any amount from 0 % to about 20 % (such as, as non-limiting examples, 0 % to about 15 %, 0 % to about 10 %, 0 % to about 5 %, etc.) by weight and water in any amount from about 80 % to 100 % (such as, as non-limiting examples, about 85 % to 100 %, about 90 % to 100 %, about 95 % to 100 %, etc.) by weight, where the percent is a percent by weight of the blend. As a blend, the reducer/thinner is a blend known in the art that may be added to a coating to adjust the viscosity of the coating to allow for efficient printing or other application. For rotogravure printing of a coating of the present application, the target viscosity may be from about 50 to about 125 centipoise (from about 15 to about 37 seconds on a Shell Cup #4) or from about 70 to about 125 centipoise (from about 21 to about 37 seconds on a Shell Cup #4) or from about 90 to about 107 centipoise (from about 27 to about 32 seconds on a Shell Cup #4).

The anti-glare, texture coating may also comprise additional coating additives. For example, the coating may comprise additives to affect the coefficient of friction (COF) to address sliding or skidding. Such additives may provide anti-skid properties or otherwise prevent sliding. A non-limiting example of an anti-skid additive is HYPOD™ 8501 Polyolefin Dispersion, available from The Dow Chemical Company (Midland, Michigan).

The anti-glare, texture coating may be produced as follows; The anti-glare agent is mixed with the texture agent. The viscosity is then measured. If the viscosity is not within a target range, the reducer/thinner (either water only or a water/isopropyl alcohol blend as described above) is added in an amount known to a person of ordinary skill in the art. The combination is mixed and the viscosity is again measured. Once the viscosity is within the target range, the combination is trialed as known in the art for the coating or printing application. Adjustments (e.g., further additions of the reducer/thinner) are made as needed based on the quality of the trial. Once the quality of the trial is acceptable as known in the art, the optional coreactant additive may be mixed with the combination to form the coating.

Specific examples of produced coatings (with weight percent of the coating listed) are reported in Table 1.

**TABLE 1**

| | Example 1 | Example 2 | Example 3 | Example 4 | Example 5 |
|---|---|---|---|---|---|
| Opulux 4903 | 83.50 | 83.50 | 83.50 | 83.50 | 83.50 |
| Texture-5384W | 3.00 | | | | |
| Texture-5382W | 12.00 | 15.00 | 10.00 | | |
| Texture-5380W | | | 5.00 | 10.00 | |
| Texture-5378W | | | | 5.00 | 5.00 |
| Texture-UF | | | | | 10.00 |
| CR 9-101 | 1.50 | 1.50 | 1.50 | 1.50 | 1.50 |

As described above, the coating may be applied to a thermoplastic film via flexographic printing or coating or rotogravure printing or coating. As known in the art, when viewed under a printer's loop, the edge of a coating applied to a substrate via flexographic printing / coating or flexography has a straight edge and the edge of a coating applied to a substrate via rotogravure printing /coating or gravure has a scalloped edge. With flexographic printing or coating or rotogravure printing or coating, the coating may be pattern-applied or flood coated. A non-limiting example of a thermoplastic film to which the coating may be applied is a monolayer film of 48-gauge biaxially oriented polyethylene terephthalate. Prior to the application of the coating, this film may (or may not) be corona treated as known in the art. In one embodiment, a rotogravure press may apply ink to the optionally corona-treated side (for a surface print) or to the non-treated side (for a reverse print). The press then applies the coating to the optionally corona-treated side either over the ink (if surface printed) or without ink (if reverse printed). As known, in the art, the press may use thermal forced air to dry the coated and optionally printed film. The resulting film may then be laminated (e.g., via adhesive lamination, extrusion lamination or otherwise as known in the art) to another film, such as, as a non-limiting example, a barrier sealant film. A non-limiting example of a barrier sealant film is a 4-mil (102-micron) thick film having the general construction reported in Table 2.

**TABLE 2**

| | Weight % of Film | Component | Weight % of Layer |
|---|---|---|---|
| Layer 1 | 29.5 | Ultra low density polyethylene (ULDPE) | 64.1 |
| | | Linear low density polyethylene (LLDPE) | 34.3 |
| | | Processing aids | 1.6 |
| Layer 2 | 17.6 | Ultra low density polyethylene (ULDPE) | 64.1 |
| | | Linear low density polyethylene (LLDPE) | 34.3 |
| | | Processing aids | 1.6 |
| Layer 3 | 7.0 | Linear low density polyethylene (LLDPE) tie | 85.9 |
| | | Tie concentrate | 14.1 |
| Layer 4 | 11.5 | Ethylene vinyl alcohol (EVOH) | 100.0 |
| Layer 5 | 15.9 | Linear low density polyethylene (LLDPE) tie | 85.9 |
| | | Tie concentrate | 14.1 |
| Layer 6 | 15.9 | Ethylene vinyl acetate (EVA) | 82.0 |
| | | Polybutene (PB) | 18.0 |
| Layer 7 | 2.6 | Ethylene vinyl acetate (EVA) | 95.0 |
| | | Processing aids | 5.0 |

After adhesive lamination, the multilayer film with the anti-glare, texture coating is cured at room temperature for 24 hours. In one embodiment, the film is not subjected to radiation curing in the form of UV radiation or e-beam radiation or otherwise or to any energy curing other than the thermal forced air of the press used to dry the coated and optionally printed film. As the film is not subjected to UV radiation in this embodiment, the coating does not require a photo initiator.

When applied to a film, each of the coatings of Examples 1-5 reported in Table 1 provided heat resistance, abuse resistance and printability based on tests known in the art. As evidence of heat resistance, each coated film released from a platen without sticking when placed in a heat sealer at 400 ° F (204 ° C) at 40 psi (275.790 kPA) for one second dwell time. As evidence of abuse resistance, each coated film did not lose any coating when scratched with a fingernail. As evidence of printability, each coated film printed without any known print defects (such as streaks, tails, clouds, etc.) as known in the rotogravure printing arts.

Additionally, various properties of the anti-glare, texture coating may be measured. These properties include but are not limited to gloss level and roughness/texture. Gloss level is a visual impression resulting from surface evaluation. The more direct light that is reflected, the higher the gloss level and vice versa. Gloss level (or specular reflection) may be measured via a glossmeter. The measurement values of a glossmeter relate to the amount of reflected light from a black glass standard with a defined refractive index, not to the amount of incident light The measurement value for this defined standard is equal to 100 gloss units (calibration). Materials with a higher refractive index, such as uncoated thermoplastic films, may have measurement values above 100 gloss units (GU). As a result, for some applications, the gloss level may be documented as a percent reflection of illuminated light.

To determine a non-limiting example gloss level for an embodiment of the anti-glare, texture coating of the present application, the gloss units for a film having the coating of Example 2 and for the same film not having the coating were measured using a BYK-Gardner Glossmeter. The average reading at 60 degree for a film with the anti-glare, texture coating was 2.4 gloss units, while the average reading at 60 degree for a film without the anti-glare texture coating was 123.6 gloss units, resulting in a gloss level of 1.94%. According to product literature from BYK-Gardner, a material with 2.4 gloss units at 60 degree is considered a low gloss material

Additional gloss units were measured for further embodiments of the anti-glare, texture coating of the present application. The gloss units for films having the coating of each of Examples 1-5 were measured as described above. The average gloss units at 60 degree is reported in Table 3. (The reported average gloss units for each example is based on 15 readings. Statistically, the high value and low value for each of the 15 readings for each example cross over one another.) Using an average reading of 123.6 gloss units for a film without the anti-glare, texture coating, the gloss level in percentage (%) is also reported in Table 3.

**TABLE 3**

| **Example** | **Average Gloss Units** | **Gloss Level (%)** |
|---|---|---|
| Example 1 | 3.6 | 2.91 |
| Example 2 | 3.9 | 3.16 |
| Example 3 | 3.8 | 3.07 |
| Example 4 | 4.1 | 3.32 |
| Example 5 | 3.9 | 3.16 |

Therefore, a film having the anti-glare, texture coating of the present application may have a gloss level of from 0 % to about 15 % or from 0 % to about 10 % or from 0 % to about 5 % or from about 1.5 % to about 3.5 % or less than about 5 %.

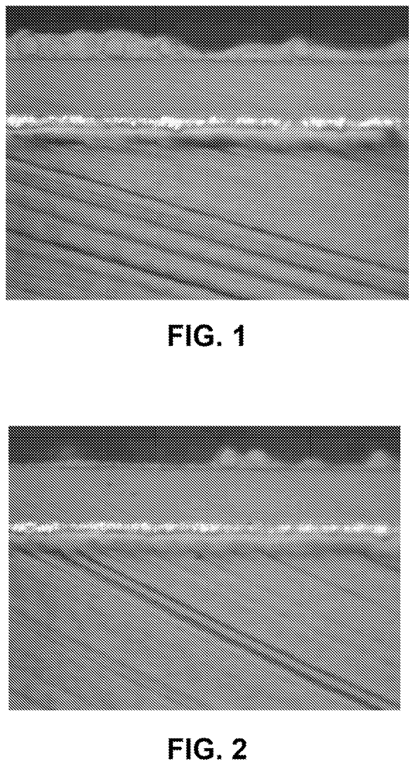

Texture may also be evaluated for the anti-glare, texture coating of the present application. A film having the coating of Example 1 was examined with a first light microscope / scanning electron microscope (SEM) (the "first SEM"). The first SEM is Model 1645 from Amray, Inc. The first SEM uses Semicaps software for analysis. FIGS 1 and 2 are SEM photographs of the surface of an embodiment of a packaging material according to the present application, FIGS. 1 and 2 are cross-sections of the coated film with the first SEM at 1000 times magnification. FIG. 1 is a cross-section of an area of the coated film with higher distribution of acrylic beads (or "first particle" from the anti-glare agent) and polyethylene particles (or "second particle" from the texture agent). FIG. 2 is a cross-section of an area of the coated film with lower distribution of acrylic beads and polyethylene particles. Based on FIGS. 1 and 2, an example, non-limiting measurement of the vertical distance between the highest peak and the deepest valley (also known as "Single Roughness Depth" or "Surface Roughness Average" or "RA") was estimated to be from about 0.15 mil (3.8 microns) to about 0.20 mil (5.1 microns).

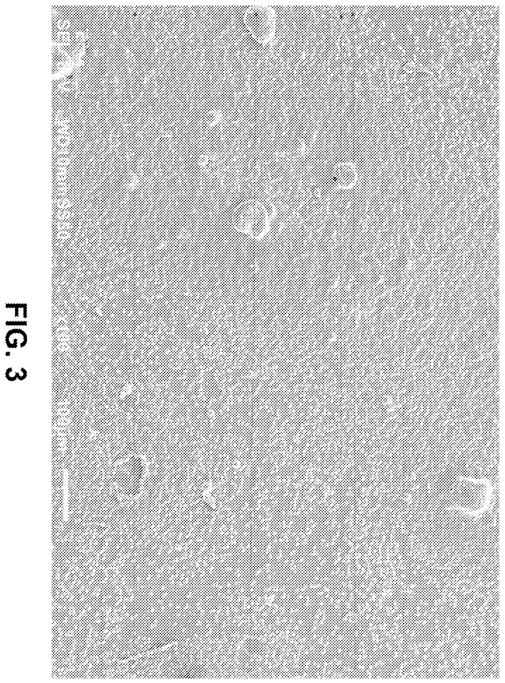

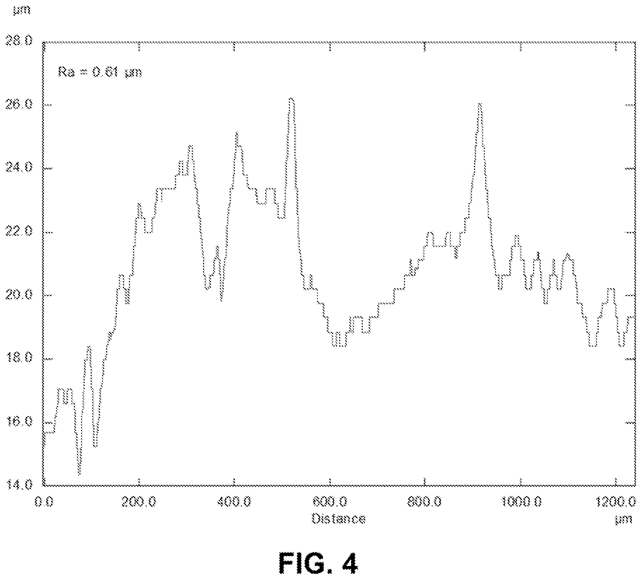

Additional RA measurements for a film having the coating of Example 1 were obtained using a second scanning electron microscope (SEM) (the "second SEM"). The second SEM is a JSM-6010PLUS/LA Scanning Electron Microscope available from JEOL USA, Inc. (Peabody, Massachusetts). The second SEM uses Scandium software from Olympus for analysis. With the second SEM, RA was measured at low magnification (e.g., at 100 times magnification). Readings at 0 ° tilt and 7 ° tilt at 100 times magnification were stacked and combined for a three-dimensional profile to facilitate the determination of RA. FIG. 3 is a SEM photograph of a sample stacked image of the surface of an embodiment of a packaging material according to the present application. For this embodiment, the RA between successive points of the film having the coating of Example 1 ranged from 0.43 microns to 5.08 microns and was, understandably, dependent on the track of the profile line. The Average RA was reported at 0.61 microns or approximately 1 micron. FIG 4 is a SEM height profile of an embodiment of a packaging material according to the present application. This height profile was determined at 7 ° tilt and 100 times magnification. It reports the vertical height above the surface across the width of the film having the coating of Example 1. For example at 200 microns from the edge of this film, the vertical height above the surface was approximately 19.5 microns.

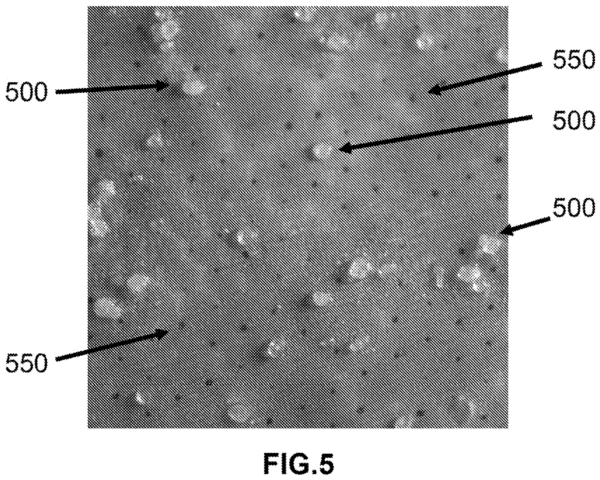

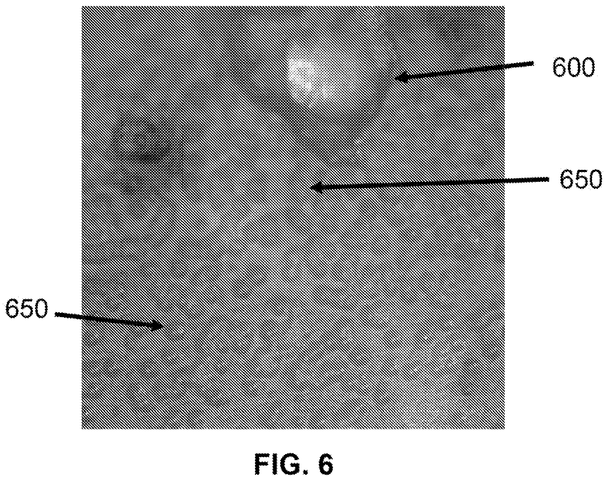

FIG 5 is an SEM photograph of the surface of an embodiment of a packaging material according to the present application. FIG. 5 is a surface evaluation of a film having the coating of Example 1 with the first SEM at 50 times magnification. The larger, lighter particles, e.g., particles 500, were polyethylene particles, and measured approximately 70 microns in diameter; the smaller, darker particles, e.g., particles 550, were ink. Based on FIG.5, an example, non-limiting measurement of the distribution of polyethylene particles on this coated film surface was estimated to be about 600 particles per square centimeter. FIG. 6 is a SEM photograph of the surface of an embodiment of a packaging material according to the present application. FIG. 6 is a surface evaluation of a film having the coating of Example 1 with the first SEM at 500 times magnification. The large particle near the upper center was a polyethylene particle 600; the smaller particles distributed throughout were acrylic beads 650.

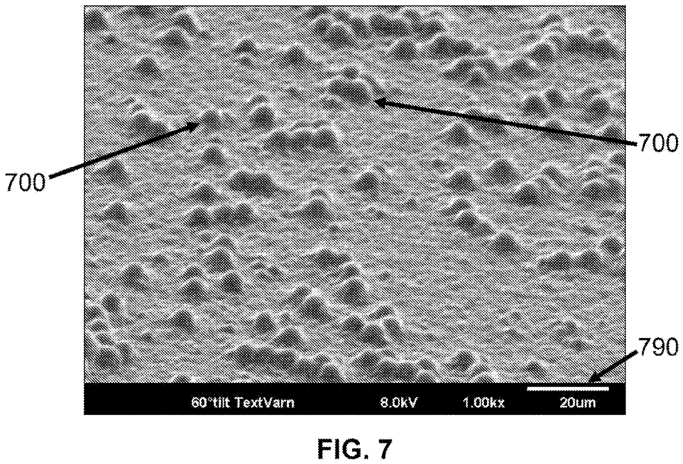

FIG. 7 is a SEM photograph of the surface of an embodiment of a packaging material according to the present application. FIG. 7 is a surface evaluation of a film having the coating of Example 1 with the first SEM at a 60 degree tilt at 1000 times magnification. The larger "bumps" e.g., particles 700, were acrylic beads from the anti-glare agent. Based on a ratio of 20 µm of film surface per, e.g., 23 millimeters (depending on size of image when printed or otherwise viewed) of picture (as described in legend 790 at the lower right corner), an example, non-limiting measurement of the diameter range for the majority of the acrylic beads was from about 1 micron to about 5 microns.

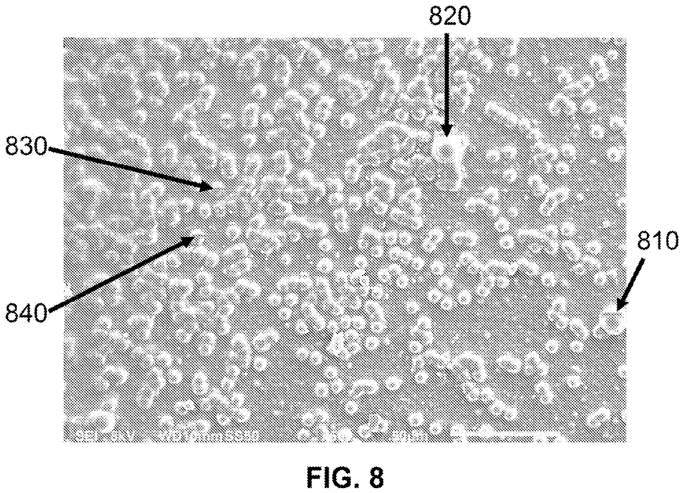

FIG. 8 is a SEM photograph of the surface of an embodiment of a packaging material according to the present application. FIG. 8 is a surface evaluation of a film having the coating of Example 1 with the second SEM at 0 degree tilt at 500 times magnification. The larger "bumps" (e.g., particle 810, particle 820, particle 830, particle 840) were, again, acrylic beads from the anti-glare agent. According to the second SEM, particle 810 had a diameter of about 9.7 microns, particle 820 had a diameter of about 8.4 microns, particle 830 had a diameter of about 5.0 microns and particle 840 had a diameter of about 6.4 microns. Based on FIG. 7 and FIG. 8, the acrylic beads in these embodiments had a particle size of greater than 0 microns but less than 10 microns. Also according to the second SEM, an example, non-limiting measurement of the distribution of acrylic beads on this coated film surface was estimated to be from about 700,000 particles per square centimeter to about 1,000,000 particles per square centimeter.

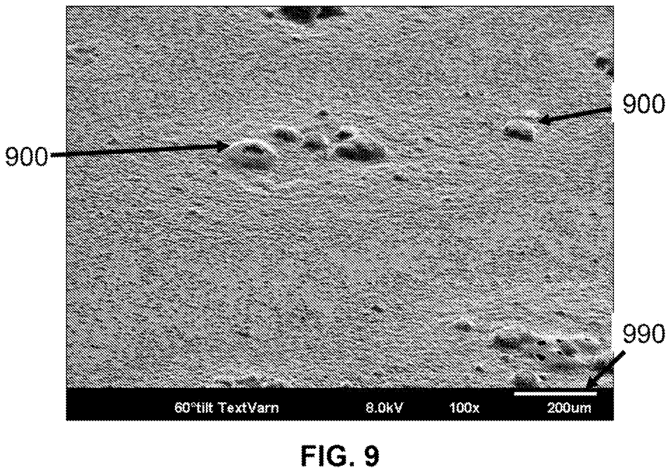

FIG. 9 is a SEM photograph of the surface of an embodiment of a packaging material according to the present application. FIG. 9 is a surface evaluation of a film having the coating of Example 1 with the first SEM at a 60 degree tilt at 100 times magnification. The larger particles e.g., particles 900, were polyethylene particles from the texture agent Based on a ratio of 200 µm of film surface per, e.g., 21 millimeters (depending on size of image when printed or otherwise viewed) of picture (as described in legend 990 at the lower right corner), some of the polyethylene particles had an example, non-limiting diameter of about 110 microns.

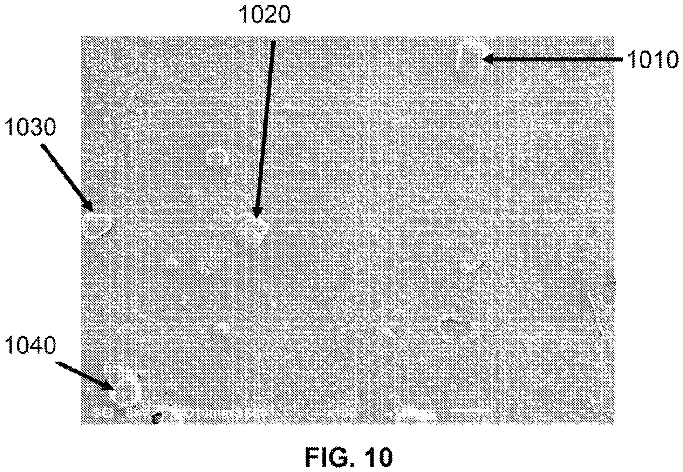

FIG. 10 is a SEM photograph of the surface of an embodiment of a packaging material according to the present application. FIG. 10 is a surface evaluation of a film having the coating of Example 1 with the second SEM at 0 degree tilt at 100 times magnification. The larger particles (e.g., particle 1010, particle 1020, particle 1030, particle 1040) were, again, polyethylene particles from the texture agent. According to the second SEM, particle 1010 had a diameter of about 64 microns, particle 1020 had a diameter of about 69.5 microns, particle 1030 had a diameter of about 78 microns and particle 1040 had a diameter of about 73.5 microns. According to the second SEM, the polyethylene particles had a non-limiting, example average particle size of from about 70 microns to about 100 microns. Also according to the second SEM, an example, non-limiting measurement of the distribution of polyethylene particles on this coated film surface was estimated to be from about 1,500 particles per square centimeter to about 2,000 particles per square centimeter.

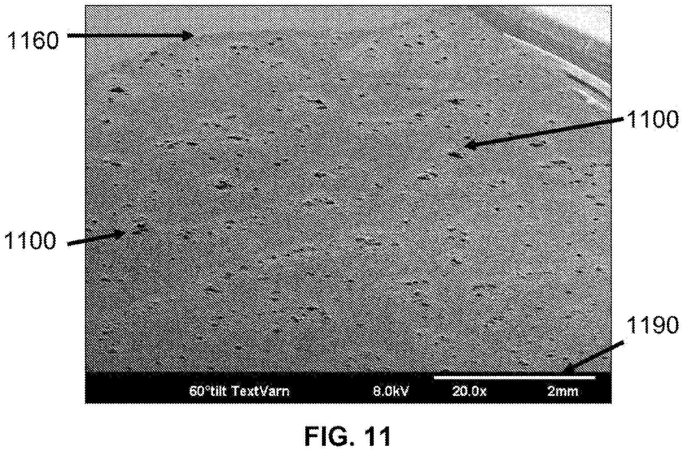

FIG. 11 is a SEM photograph of the surface of an embodiment of a packaging material according to the present application. FIG. 11 is a surface evaluation of a film having the coating of Example 1 with the first SEM at a 60 degree tilt at 20 times magnification. The wavy line 1160 in the upper left corner depicted the boundary between uncoated film surface and coated film surface. Based on a ratio of 2mm of film surface per, e.g., 42 millimeters (depending on size of image when printed or otherwise viewed) of picture (as described in legend 1190 in the lower right corner), an example, non-limiting measurement of the distribution of polyethylene particles, e.g., particles 1100, on this coated film surface was estimated to be about 4800 particles per square centimeter.

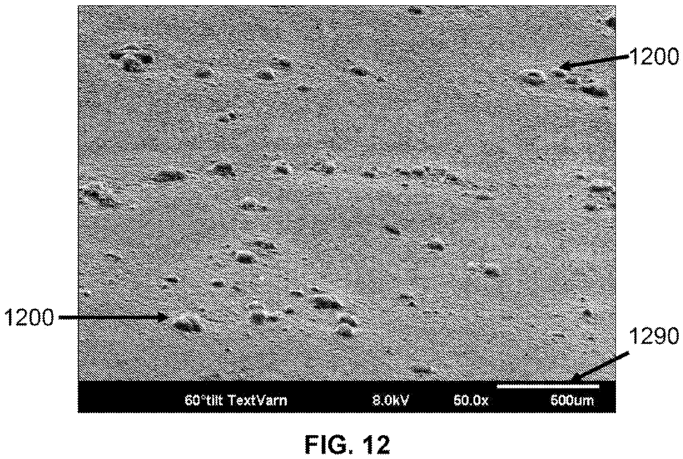

FIG. 12 is a SEM photograph of the surface of an embodiment of a packaging material according to the present application. FIG. 12 is a surface evaluation of a film having the coating of Example 1 with the first SEM at a 60 degree tilt at 50 times magnification. Based on a ratio of 500 µm of film surface per, e.g., 28 millimeters (depending on size of image when printed or otherwise viewed) of picture (as described in legend 1290 the lower right corner), an example, non-limiting measurement of the distribution of polyethylene particles, e.g., particles 1200, on this coated film surface was estimated to be about 5000 particles per square centimeter.

In addition or as an alternative to microscopy, texture/roughness may be measured with a profilometer and/or based on the following "Roughness Parameters" (as reported at http://www.rubert.co.uk/Ra.htm on February 3, 2014):

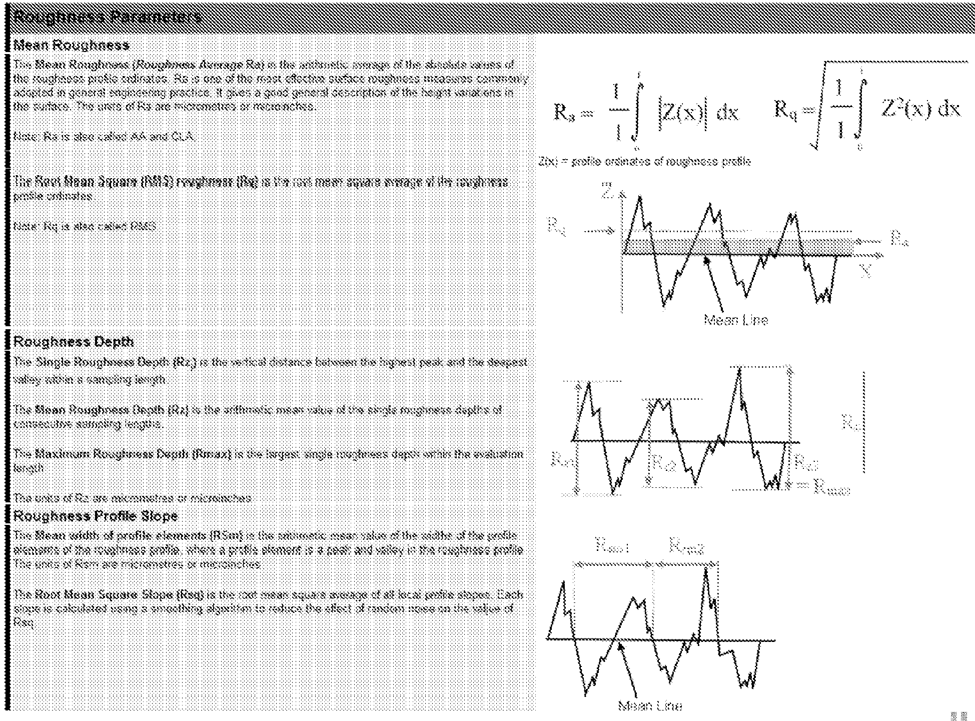

## Claims

1. A coating comprising an emulsion comprising
(a) water, (b) a first particle comprising particles having an average particle size of greater than 0 but less than 10 microns as determined via scanning electron microscopy and comprising beads comprising thermoplastic polymers or copolymers of acrylic acid, methacrylic acid, esters of these acids, or acrylonitrile, (c) a carrier comprising thermoplastic polymers or copolymers of acrylic acid, methacrylic acid, esters of these acids, or acrylonitrile and (d) a second particle comprising particles having an average particle size of from 35 microns to 110 microns as determined via scanning electron microscopy and comprising polyamide, polyethylene, polypropylene, polytetrafluoroethylene or combinations of such,
wherein the combination of the water, the first particle and the carrier comprises from 75 % to 95 %, or optionally from 80 % to 90 % or from 82 % to 85 %, by weight of the coating and wherein the second particle comprises from 5 % to 25 %, or optionally from 10 % to 20 % or from 15 % to 18 %, by weight of the coating.

2. The coating of claim 1, wherein the coating further comprises a coreactant additive in an amount from 0 % to 5 % by weight of the coating.

3. The coating of claim 1, wherein the second particle comprises particles of more than one size having a first size and a second size.

4. A packaging material comprising
a substrate comprising metal, glass, paper, plastic or thermoplastic; and
the coating of claim 1.

5. The packaging material of claim 4 wherein the substrate comprises a thermoplastic film.

6. The packaging material of claim 4, wherein the substrate comprises biaxially oriented polyethylene terephthalate.

7. The packaging material of claim 4 wherein the coating is flexographic printed or rotogravure printed.

8. The packaging material of claim 4, wherein the packaging material is food packaging.

9. A method of rotogravure printing the coating of claim 1 to a substrate comprising the sequential steps of
(a) preparing the coating by mixing the emulsion;
(b) using a rotogravure press to apply the coating to the substrate, wherein the substrate comprises metal, glass, paper, plastic or thermoplastic; and
(c) allowing the coated substrate to cure in the absence of radiation curing.

10. The method of claim 9 further comprising corona treating the substrate prior to using the rotogravure press to apply the coating to the substrate.

11. The method of claim 9 further comprising applying ink to the substrate as either a surface print or a reverse print prior to using the rotogravure press to apply the coating to the substrate.

12. The method of claim 9, wherein the rotogravure press applies the coating on a surface over the ink if surface printed or on a surface without the ink if reverse printed.

## Patentansprüche

1. Eine Beschichtung, umfassend eine Emulsion, umfassend
(a) Wasser, (b) ein erstes Teilchen umfassend Teilchen mit einer mittleren Teilchengröße von größer als 0 aber weniger als 10 Mikron, mittels Rasterelektronenmikroskopie bestimmt, und umfassend Perlen umfassend thermoplastische Polymere oder Copolymere von Acrylsäure, Methacrylsäure, Estern dieser Säuren, oder Acrylnitril, (c) einen Träger umfassend thermoplastische Polymere oder Copolymere von Acrylsäure, Methacrylsäure, Estern dieser Säuren, oder Acrylnitril und (d) ein zweites Teilchen umfassend Teilchen mit einer mittleren Teilchengröße von 35 Mikron bis 110 Mikron, mittels Rasterelektronenmikroskopie bestimmt, und umfassend Polyamid, Polyethylen, Polypropylen, Polytetrafluorethylen oder Kombinationen davon,
wobei die Kombination des Wassers, des ersten Teilchens und des Trägers von 75 % bis 95 %, oder gegebenenfalls von 80 % bis 90 % oder von 82 % bis 85 %, auf das Gewicht der Beschichtung bezogen, umfasst und wobei das zweite Teilchen von 5 % bis 25 %, oder gegebenenfalls von 10 % bis 20 % oder von 15 % bis 18 %, auf das Gewicht der Beschichtung bezogen, umfasst.

2. Die Beschichtung nach Anspruch 1, wobei die Beschichtung weiter ein Co-Reaktantadditiv in einer Menge von 0 % bis 5 %, auf das Gewicht der Beschichtung bezogen, umfasst.

3. Die Beschichtung nach Anspruch 1, wobei das zweite Teilchen Teilchen mit mehr als einer Größe mit einer ersten Größe und einer zweiten Größe umfasst.

4. Ein Verpackungsmaterial, umfassend
ein Substrat umfassend Metall, Glas, Papier, Plastik oder Thermoplastik; und
die Beschichtung nach Anspruch 1.

5. Das Verpackungsmaterial nach Anspruch 4 wobei das Substrat einen thermoplastischen Film umfasst.

6. Das Verpackungsmaterial nach Anspruch 4, wobei das Substrat ein biaxial orientiertes Polyethylenterephthalat umfasst.

7. Das Verpackungsmaterial nach Anspruch 4 wobei die Beschichtung flexographisch gedruckt oder rotogravure-gedruckt ist.

8. Das Verpackungsmaterial nach Anspruch 4, wobei das Verpackungsmaterial Lebensmittelverpackung ist.

9. Ein Verfahren zum Rotogravurcdruckcn der Beschichtung nach Anspruch 1 auf ein Substrat, umfassend die aufeinanderfolgenden Schritte des
(a) Herstellens der Beschichtung durch Mischen der Emulsion;
(b) Verwendens einer Rotogravuredruckpresse, um die Beschichtung auf das Substrat aufzubringen, wobei das Substrat Metall, Glas, Papier, Plastik oder Thermoplastik umfasst; und
(c) Härtenlassens des beschichteten Substrats in Abwesenheit von Strahlungshärtung.

10. Das Verfahren nach Anspruch 9, weiter umfassend Koronabehandeln des Substrats vor der Verwendung der Rotogravuredruckpresse, um die Beschichtung auf das Substrat aufzubringen.

11. Das Verfahren nach Anspruch 9, weiter umfassend Aufbringen von Tinte auf das Substrat entweder als ein Oberflächendruck oder ein Reversdruck vor der Verwendung der Rotogravuredruckpresse, um die Beschichtung auf das Substrat aufzubringen.

12. Das Verfahren nach Anspruch 9, wobei die Rotogravuredruckpresse die Beschichtung bei Oberflächendruck auf eine Oberfläche über der Tinte oder bei Reversdruck auf eine Oberfläche ohne die Tinte aufbringt.

## Revendications

1. Revêtement comprenant une émulsion comprenant
(a) de l'eau, (b) une première particule comprenant des particules ayant une taille moyenne de particule supérieure à 0 mais inférieure à 10 microns, telle que déterminée par microscopie électronique à balayage et comprenant des billes comprenant des polymères thermoplastiques ou copolymères d'acide acrylique, d'acide méthacrylique, d'esters de ces acides, ou d'acrylonitrile, (c) un véhicule comprenant des polymères thermoplastiques ou copolymères d'acide acrylique, d'acide méthacrylique, d'esters de ces acides, ou d'acrylonitrile, et (d) une seconde particule comprenant des particules ayant une taille moyenne de particule de 35 microns à 110 microns, telle que déterminée par microscopie électronique à balayage et comprenant du polyamide, du polyéthylène, du polypropylène, du polytétrafluoroéthylène ou des combinaisons de ceux-ci,
dans lequel la combinaison de l'eau, de la première particule et du véhicule comprend de 75 % à 95 %, ou optionnellement de 80 % à 90 % ou de 82 % à 85 %, en poids du revêtement et dans lequel la seconde particule comprend de 5 % à 25 %, ou optionnellement de 10 % à 20 % ou de 15 % à 18 %, en poids du revêtement.

2. Revêtement selon la revendication 1, dans lequel le revêtement comprend en outre un additif co-réactif en une quantité de 0 % à 5 % en poids du revêtement.

3. Revêtement selon la revendication 1, dans lequel la seconde particule comprend des particules de plus d'une taille ayant une première taille et une seconde taille.

4. Matériau d'emballage comprenant
un substrat comprenant du métal, du verre, du papier, du plastique ou du thermoplastique ;
et le revêtement selon la revendication 1.

5. Matériau d'emballage selon la revendication 4, dans lequel le substrat comprend un film thermoplastique.

6. Matériau d'emballage selon la revendication 4, dans lequel le substrat comprend du polyéthylène téréphtalate orienté biaxialement.

7. Matériau d'emballage selon la revendication 4, dans lequel le revêtement est imprimé par flexographie ou imprimé par rotogravure.

8. Matériau d'emballage selon la revendication 4, dans lequel le matériau d'emballage est un emballage alimentaire.

9. Méthode d'impression par rotogravure du revêtement selon la revendication 1 sur un substrat, comprenant les étapes séquentielles
(a) préparer le revêtement en mélangeant l'émulsion ;
(b) utiliser une presse à rotogravure pour appliquer le revêtement sur le substrat, où le substrat comprend du métal, du verre, du papier, du plastique ou du thermoplastique ; et
(c) permettre au substrat revêtu de durcir en l'absence de durcissement par rayonnement.

10. Méthode selon la revendication 9, comprenant en outre le traitement corona du substrat avant d'utiliser la presse à rotogravure pour appliquer le revêtement sur le substrat.

11. Méthode selon la revendication 9, comprenant en outre l'application d'encre sur le substrat sous forme soit d'imprimé de surface soit d'imprimé au verso avant d'utiliser la presse à rotogravure pour appliquer le revêtement sur le substrat.

12. Méthode selon la revendication 9, dans laquelle la presse à rotogravure applique le revêtement sur une surface par-dessus l'encre si la surface est imprimée ou sur une surface sans encre si le verso est imprimé.
